# EUROPEAN PATENT APPLICATION

(11) **EP 2 610 705 A1**
(43) Date of publication of application: **03.07.2013**
(21) Application number: 12185919.3
(22) Date of filing: 25.09.2012
(51) Int. Cl.: G06F 3/01

(54) **Electronic Apparatus and Method for Controlling Thereof**

(30) Priority: 30.12.2011 KR 20110147457
(71) Applicant: Samsung Electronics Co., Ltd., Suwon-si, Gyeonggi-do, 443-742 (KR)
(72) Inventor: Han, Sang-jin, Gyeonggi-do (KR); Kwon, Yong-hwan, Gyeonggi-do (KR); Kim, Jung-geun, Gyeonggi-do (KR)
(74) Representative: Robinson, Ian Michael

(57) **Abstract**

An electronic apparatus and a method for controlling thereof are provided. The method for controlling the electronic apparatus includes displaying an icon and a pointer to perform a motion task mode when a motion start command is input, moving the pointer in accordance with a first user motion, and executing a function corresponding to the icon when a second user motion is input while the pointer is placed on the icon. Accordingly, the user controls the electronic apparatus using the user motion more conveniently and intuitively.

## Description

### CROSS-REFERENCE TO RELATED APPLICATION

This application claims priority from Korean Patent Application No. 10-2011-0147457, filed on December 30, 2011 in the Korean Intellectual Property Office.

### BACKGROUND

### 1. Field

Methods and apparatuses consistent with exemplary embodiments relate to an electronic apparatus and a method for controlling the electronic apparatus, and more particularly, to an electronic apparatus which is controlled in accordance with a motion input through a motion input receiver, and a method for controlling the electronic apparatus.

### 2. Description of the Related Art

With the development of electronic technologies, various kinds of electronic apparatuses have been developed and distributed. In particular, various types of electronic apparatuses including a television (TV) are being widely used in general households. Such electronic apparatuses are equipped with a wide variety of functions. For instance, a TV is connected to the Internet and provides Internet-based services. In addition, users may view a number of digital broadcast channels through a TV.

Accordingly, various input methods are required to use such functions of electronic apparatuses effectively. For instance, input methods using a remote controller, a mouse, and a touch pad have been adapted for use of the electronic apparatuses.

However, those simple input methods put a limit to effectively using various functions of the electronic apparatuses. For example, if all functions of an electronic apparatus are controlled only by a remote controller, it is necessary to increase the number of buttons on the remote controller. However, it is not functional for a remote controller to have so many buttons or easy for general users of the remote controller to utilize the remote controller. In addition, if all menus are displayed on the screen, users need to go through complicated menu trees one by one in order to select a desired menu, causing inconvenience to the users.

Therefore, a method for controlling an electronic apparatus more conveniently and intuitively is required.

### SUMMARY

One or more exemplary embodiments may overcome the above disadvantages and other disadvantages not described above. However, it is understood that one or more exemplary embodiment are not required to overcome the disadvantages described above, and may not overcome any of the problems described above.

One or more exemplary embodiments provide an electronic apparatus which executes its functions using a user motion which is input through a motion input receiver and a plurality of icons and a pointer which are displayed on a display screen, and a method for controlling the electronic apparatus.

According to the present invention there is provided an apparatus and method as set forth in the appended claims. Other features of the invention will be apparent from the dependent claims, and the description which follows. In one example there is provided a method for controlling an electronic apparatus, the method including: if a motion start command is input, displaying an icon and a pointer to perform a motion task mode, moving the pointer in accordance with a first user motion, and if a second user motion is input while the pointer is placed on the icon, executing a function corresponding to the icon.

The pointer placed on the icon may be fixed while the second user motion is input. The apparatus may cause the pointer to 'stick' and remain fixed to the icon when the pointer is moved to the icon in response to the first user motion. Thus, it is now easier for the user to accurately control the electronic apparatus by then performing the second motion while the pointer remains fixed to the icon.

The step of executing the function may include, if the pointer is placed on the icon and input of the second user motion is maintained, continuously executing the function of the icon on which the pointer is placed. The function may be repeated multiple times (e.g. incrementally inceases or incrementally decreased) when the apparatus recognizes that the second user motion is continued or maintained by the user.

The first user motion may be a spread motion, such as the fingers of a user's hand spreading, and the second user motion may be a grab motion, such as fingers of the user's hand clenching. The first and second user motions can be recognizably different motions (e.g. a hand spread motion and a hand grab motion). The electronic apparatus may be arranged to distinguish the motions of the user by comparing the user motion against a set of predetermined motions, and thus distinguish the second user motion from the first user motion. A beginning user motion may be recognized in order to begin the motion mode (e.g. a horizontal hand shake motion).

The electronic apparatus may have a small number of regularly used controls, such as a volume control and a channel control, which are frequently used by the user. Hence, the motion mode is convenient for the user to control these frequently used controls. Different frequently used functions may be associated with different beginning motions. The relevant functions may be divided and a different icon or group of icons may be displayed. The functions and the displayed icons may be based on the user motion used to begin the motion mode. That is, functions and different respective icons may be displayed in response to different movements of the user's hands. As examples, the displayed icon may include at least one of a volume-up icon, a volume-down icon, a channel-up icon, and a channel-down icon.

The icons relevant to each control function are suitably displayed in distinct and separate areas of the screen so as to be readily controlled by the user. The distance between the icons is suitably sufficient for the apparatus to accurately determine the control of interest to the user by placing the pointer on the relevant icon. For example, the displayed icons may include a volume-up icon and a volume-down icon which are displayed on a left area of a display screen, and a channel-up icon and a channel-down icon which are displayed on the right area of the display screen. However, it is noted that this is only one exemplary embodiment and the icons can be differently arranged on the display screen.

Volume level information currently set in the electronic apparatus may be displayed on an area on which the volume-up icon and the volume-down icon are displayed, and channel information currently set in the electronic apparatus may be displayed on an area on which the channel-up icon and the channel-down icon are displayed. Thus, the user is given visual feedback in response to their actions of the second user motion implementing the respective function of the apparatus.

The method may further include detecting an end motion, which if input, removes the icons and the pointer from the display screen. The end motion causes the apparatus to end the motion mode and return to displaying a previous display, such as a broadcast program.

In one aspect there is provided an electronic apparatus, including: a motion input receiver which receives input of a user motion, a display, and a controller which, if a motion start command is input through the motion input receiver, displays an icon and a pointer to perform a motion task mode, controls the display to move the pointer in accordance with a first user motion which is input through the motion input receiver, and, if a second user motion is input through the motion input receiver while the pointer is placed on the icon, executes a function corresponding to the icon.

While the second user motion is input, the controller may fix the pointer without moving the pointer.

If the pointer is placed on the icon and input of the second user motion is maintained, the controller may continuously execute the function of the icon on which the pointer is placed.

The first user motion may be a spread motion, such as the fingers of the user's hand spreading, and the second user motion may be a grab motion, such as the fingers of the user's hand clenching. However, this is only one exemplary embodiment of the user motion and the user motion can be of different types.

The icon may include at least one of a volume-up icon, a volume-down icon, a channel-up icon and a channel-down icon.

The icon may include a volume-up icon and a volume-down icon which are displayed on a left area of a display screen, and a channel-up icon and a channel-down icon which are displayed on the right area of the display screen. However, similarly as above, this is only one exemplary embodiment and the icons can be differently arranged on the display screen.

Volume level information currently set in the electronic apparatus may be displayed on an area on which the volume-up icon and the volume-down icon are displayed, and channel information currently set in the electronic apparatus may be displayed on an area on which the channel-up icon and the channel-down icon are displayed.

If an end motion is input through the motion input receiver, the controller may remove the icons and the pointer from the display screen of the display.

### BRIEF DESCRIPTION OF THE DRAWINGS

The above and/or other aspects will be more apparent by describing in detail exemplary embodiments, with reference to the accompanying drawings, in which:

FIGS. 1 to 3 are block diagrams illustrating an electronic apparatus according to various exemplary embodiments;

FIGS. 4 to 9 are views to explain a method for controlling a channel and a volume using a user motion according to various exemplary embodiments; and

FIG. 10 is a flowchart illustrating a method for controlling an electronic apparatus using a user motion according to an exemplary embodiment.

### DETAILED DESCRIPTION OF EXEMPLARY EMBODIMENTS

Hereinafter, exemplary embodiments will be described in greater detail with reference to the accompanying drawings.

In the following description, same reference numerals are used for the same elements when they are depicted in different drawings. The matters defined in the description, such as detailed construction and elements, are provided to assist in a comprehensive understanding of exemplary embodiments. Thus, it is apparent that exemplary embodiments can be carried out without those specifically defined matters. Also, functions or elements known in the related art are not described in detail since they would obscure the exemplary embodiments with unnecessary detail.

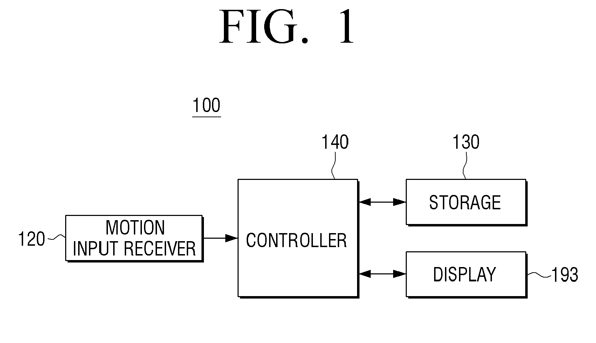

FIG. 1 is a block diagram schematically illustrating an electronic apparatus according to an exemplary embodiment.

Referring to FIG. 1, an electronic apparatus 100 includes a motion input receiver 120, a storage 130, a controller 140, and a display 193. The electronic apparatus 100 may be in the form of, but is not limited to, a smart TV, a set-top box, a personal computer (PC), a digital TV, or a mobile phone, which is connectable to an external network.

The motion input receiver 120 receives an image signal (for example, a continuous frame) which is obtained by photographing a user motion, and provides the image signal to the controller 140. For example, the motion input receiver 120 may be in the form of, but is not limited to, a camera which includes a lens and an image sensor. The motion input receiver 120 may be an all-in-one type of the electronic apparatus 100 or a standalone type. The standalone type motion input receiver 120 may be connected to the electronic apparatus 100 through a wired or wireless network.

The storage 130 stores various data and programs for driving and controlling the electronic apparatus 100. The storage 130 stores a voice recognition module to recognize a voice input through a voice input receiver and a motion recognition module to recognize a motion input through the motion input receiver 120.

The storage 130 may include a voice database and a motion database. The voice database refers to a database in which a predetermined voice and a voice task matched with the predetermined voice are recorded. The motion database refers to a database in which a predetermined motion and a motion task matched with the predetermined motion are recorded.

The display 193 displays an image corresponding to a broadcast signal which is received through a broadcast receiver. The display 193 may display image data (for example, a moving image) input through an external terminal input . The display 193 may display voice assistance information to perform a voice task and motion assistance information to perform a motion task under control of the controller 140.

The controller 140 controls the motion input receiver 120, the storage 130, and the display 193. The controller 140 may include a module to control a central processing unit (CPU) and the electronic apparatus 100, and a read only memory (ROM) and a random access memory (RAM) to store data.

If a motion is input through the motion input receiver 120, the controller 140 recognizes the motion using the motion recognition module and the motion database. The motion recognition divides an image (for example, a continuous frame) corresponding to the user motion input through the motion input receiver 120 into a background and a hand area (for example, spreading out fingers or clenching fist by cupping one hand) using the motion recognition module, and recognizes a continuous hand motion. If the user motion is input, the controller 140 stores the received image on a frame basis and senses an object (for example, a user's hand) of the user motion using the stored frame. The controller 140 detects the object by sensing at least one of a shape, color, and a motion of the object included in the frame. The controller 140 may trace the motion of the object using locations of the object included in the plurality of frames.

The controller 140 determines the motion in accordance with the shape and the motion of the traced object. For example, the controller 140 determines the user motion using at least one of a change in the shape, a speed, a location, and a direction of the object. The user motion includes a grab motion of clenching one hand, a pointing move motion of moving a displayed cursor with one hand, a slap motion of moving one hand in one direction at a predetermined speed or higher, a shake motion of shaking one hand horizontally or vertically, and a rotation motion of rotating one hand. The technical idea of the present disclosure may be applied to other motions. For example, the user motion may further include a spread motion of spreading one hand.

The controller 140 determines whether the object leaves a predetermined area (for example, a square of 40 cm X 40 cm) within a predetermined time (for example, 800 ms) in order to determine whether the user motion is a pointing move motion or a slap motion. If the object does not leave the predetermined area within the predetermined time, the controller 140 may determine that the user motion is a pointing move motion. If the object leaves the predetermined area within the predetermined time, the controller 140 may determine that the user motion is a slap motion. As another example, if the speed of the object is lower than a predetermined speed (for example, 30 cm/s), the controller 140 may determine that the user motion is a pointing move motion. If the speed of the object exceeds the predetermined speed, the controller 140 determines that the user motion is a slap motion.

As described above, the controller 140 performs a task of the electronic apparatus 100 using the recognized voice and motion. The task of the electronic apparatus 100 includes at least one of functions performed by the electronic apparatus 100, such as change of a channel, control of a volume, replay of a content (for example, a moving image, music or photo), or Internet browsing.

In particular, if a motion start command is input through the motion input receiver 120, the controller 140 changes a mode of the electronic apparatus 100 to a motion task mode. The motion start command may be a motion of shaking one hand horizontally multiple times. The motion task mode is a mode in which the electronic apparatus 100 is controlled in accordance with a user motion input through the motion input receiver 120.

If the mode is changed to the motion task mode, the controller 140 displays an icon and a pointer on the display 193 to perform the motion task mode. The displayed icon is an icon to control a function (for example, control of a volume and change of a channel) of the electronic apparatus 100. The icon may be displayed on a left area and a right area of a display screen. The pointer may be displayed at a center of the display screen.

The controller 140 moves the pointer in accordance with a first user motion input through the motion input receiver 120. The first user motion is a motion of moving one hand being spread. That is, if the motion of moving one hand being spread is input through the motion input receiver 120, the controller 140 may move the pointer in accordance with the movement of the user's hand.

If a second user motion is input through the motion input receiver 120 while the pointer is placed on an icon, the controller 140 executes a function corresponding to the icon. The second user motion may be a grab motion of clenching one hand. For example, if a grab motion of the user is input through the motion input receiver 120 while the pointer is placed on a volume-up icon, the controller 140 may increase a current volume level by "1".

The controller 140 controls the pointer such that the location of the pointer is not changed and is fixed while the second user motion is input. This is because the location of the pointer may be changed since the second user motion is misrecognized as indicating that the user's hand is moved, and thus the user may not control the electronic apparatus 100 accurately.

If input of the second user motion is maintained while the pointer is placed on the icon, the controller 140 may execute the function of the icon on which the pointer is placed continuously. For example, if the input of the second user motion is maintained while the pointer is placed on a volume-down icon, the controller 140 may decrease a volume level continuously. At this time, if the input of the second user motion is continuously maintained, the controller 140 may execute the function of the icon on which the pointer is placed more quickly. For example, if the input of the second user motion is maintained while the pointer is placed on the volume-down icon, the controller 140 may decrease the volume level with increasing speed.

If a motion end motion is input through the motion input receiver 120, the controller 140 may remove the plurality of icons and the pointer from the display screen of the display 193. The motion end motion and the motion start motion may be the same motion. However, it is noted that the motion end motion and the motion start motion are not limited to such, and the motions may be different.

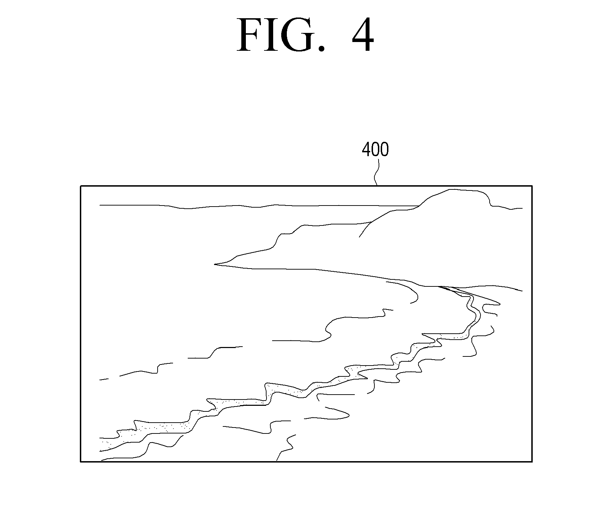

The method for controlling the electronic apparatus 100 using the user motion, the plurality of icons, and the pointer will be explained below in detail with reference to FIGS. 4 to 9.

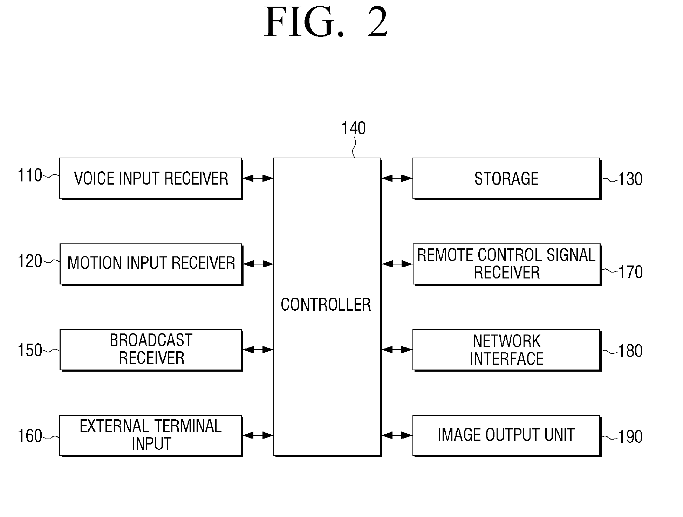

FIG. 2 is a block diagram illustrating an electronic apparatus 100 according to another exemplary embodiment. Referring to FIG. 2, the electronic apparatus 100 includes a voice input receiver 110, a motion input receiver 120, a storage 130, a controller 140, a broadcast receiver 150, an external terminal input 160, a remote control signal receiver 170, a network interface 180, and an image output unit comprising circuitry 190. The electronic apparatus 100 shown in FIG. 2 may be realized by a set-top box. However, it is noted that the electronic apparatus 100 being realized by a set-top box is only an exemplary embodiment, and the electronic apparatus 100 may be realized as other electronic devices, such as a smart TV, a personal computer (PC), a digital TV, a mobile phone, or any other device capable of reproducing audio and/or video.

The motion input receiver 120, the storage 130, and the controller 140 shown in FIG. 2 are the same as the motion input receiver 120, the storage 130, and the controller 140 shown in FIG. 1, and thus a detailed description thereof is omitted.

The voice input receiver 110 receives a voice uttered by a user. The voice input receiver 110 converts an input voice signal into an electric signal and outputs the electric signal to the controller 140. The voice input receiver 110 may be realized by a microphone. Also, the voice input receiver 110 may be realized by an all-in-one type of the electronic apparatus 100 or a standalone type. The standalone type voice input receiver 110 may be connected to the electronic apparatus 100 through a wired or wireless network.

The broadcast receiver 150 receives a broadcast signal from an external source in a wired or wireless manner. The broadcast signal may include video data, audio data, and additional data (for example, an electronic program guide (EPG)). The broadcast receiver 150 may receive broadcast signals from various sources such as a terrestrial broadcast, a cable broadcast, a satellite broadcast, and an Internet broadcast.

The external terminal input 160 receives image data (for example, a moving image and a photo), audio data (for example, music) from external sources of the electronic apparatus 100. The external terminal input 160 may include at least one of a high-definition multimedia interface (HDMI) input terminal, a component input terminal, a PC input terminal, and an USB input terminal. The remote control signal receiver 170 receives a remote control signal input from an external remote controller. The remote control signal receiver 170 may receive the remote control signal in a voice task mode or a motion task mode.

The network interface 180 may connect the electronic apparatus 10 to an external apparatus (for example, a server) under control of the controller 140. The controller 140 may download an application from the external apparatus connected through the network interface 180 or perform web browsing. The network interface 180 may provide at least one of Ethernet, a wireless local area network (LAN) 182, and Bluetooth.

The image output unit comprising circuitry 190 outputs an external broadcast signal which is received through the broadcast receiver 150, image data which is input from the external terminal input 160, or image data which is stored in the storage 130, to an external electronic apparatus (for example, a monitor or a TV).

If a user voice is input through the voice input receiver 110, the controller 140 recognizes the voice using a voice recognition module and a voice database. The voice recognition may be divided into isolated word recognition that recognizes an uttered voice by distinguishing words in accordance with a form of an input voice, continuous speech recognition that recognizes a continuous word, a continuous sentence, and a dialogic voice, and keyword spotting that is an intermediate type between the isolated word recognition and the continuous speech recognition and recognizes a voice by detecting a pre-defined keyword.

If a user voice is input, the controller 140 determines a voice section by detecting a beginning and an end of the voice uttered by the user from an input voice signal. The controller 140 calculates energy of the input voice signal, classifies an energy level of the voice signal in accordance with the calculated energy, and detects the voice section through dynamic programming. The controller 140 generates phoneme data by detecting a phoneme, which is the smallest unit of voice, from the voice signal within the detected voice section based on an acoustic model. The controller 140 generates text information by applying a hidden Markov model (HMM) to the generated phoneme data. However, the above-described voice recognition method is merely an example and other voice recognition methods may be used. In the above-described method, the controller 140 recognizes the user voice included in the voice signal.

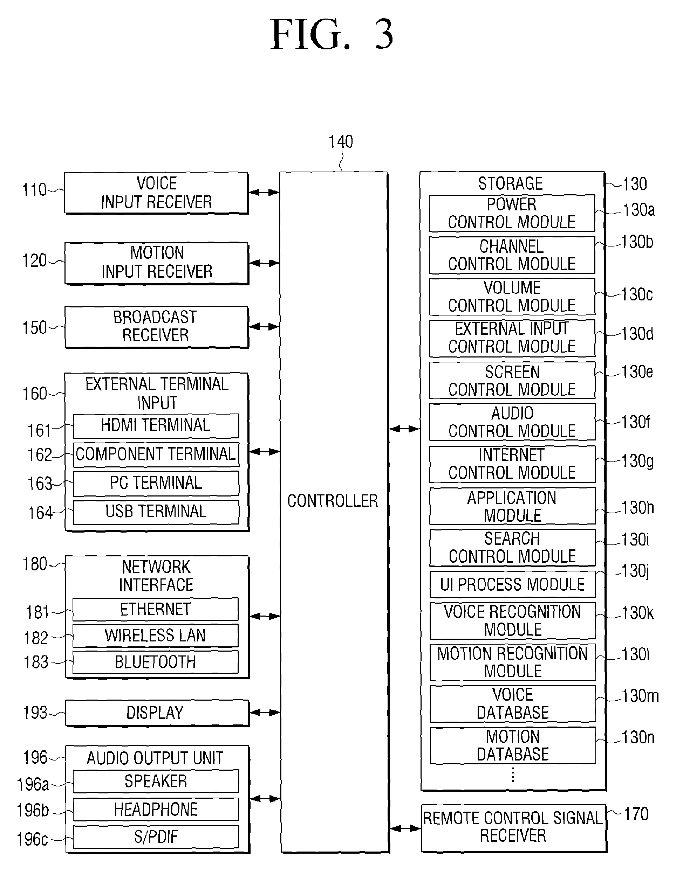

FIG. 3 is a block diagram illustrating an electronic apparatus 100 according to still another exemplary embodiment. As shown in FIG. 3, the electronic apparatus 100 includes a voice input receiver 110, a motion input receiver 120, a storage 130, a controller 140, a broadcast receiver 150, an external terminal input 160, a remote control signal receiver 170, a network interface 180, a display 193, and an audio output unit comprising circuitry 196. The electronic apparatus 100 may be, but not limited to, a digital TV.

The voice input receiver 110, the motion input receiver 120, the storage 130, the controller 140, the broadcast receiver 150, the external terminal input 160, the remote control signal receiver 170, the network interface 180, and the display 193 shown in FIG. 3 are the same as the elements of the same reference numerals shown in FIGS. 1 and 2 and thus a detailed description thereof is omitted.

The audio output unit comprising circuitry 196 outputs a voice corresponding to a broadcast signal under control of the controller 140. The audio output unit comprising circuitry 196 may include at least one of a speaker 196a, a headphone output terminal 196b, and an S/PDIF output terminal 196c.

As shown in FIG. 3, the storage 130 includes a power control module 130a, a channel control module 130b, a volume control module 130c, an external input control module 130d, a screen control module 130e, an audio control module 130f, an Internet control module 130g, an application module 130h, a search control module 130i, a Ul process module 130j, a voice recognition module 130k, a motion recognition module 130l, a voice database 130m, and a motion database 130n. These modules 130a to 130n may be realized by software to perform a power control function, a channel control function, a volume control function, an external input control function, a screen control function, an audio control function, an Internet control function, an application execution function, a search control function, and a Ul process function, respectively. The controller 140 may perform a corresponding function by executing the software stored in the storage 130.

Hereinafter, various exemplary embodiments will be explained with reference to FIGS. 4 to 9.

The controller 140 signal-processes a broadcast signal which is received through the broadcast receiver 150 and displays a broadcast image 400 on the display screen as shown in FIG. 4.

If a motion start command is input through the motion input receiver 120, the controller 140 changes a mode of the electronic apparatus 100 to a motion task mode. The motion task mode is a mode in which the electronic apparatus 100 is controlled in accordance with a user motion input through the motion input receiver 120.

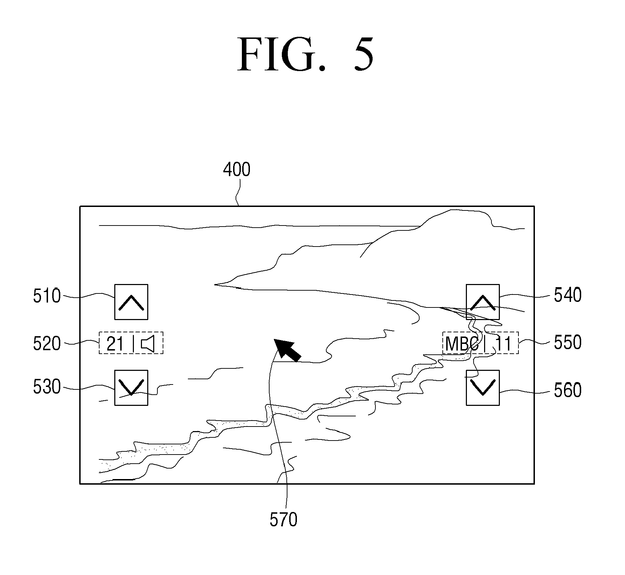

If the mode is changed to the motion task mode, the controller 140 displays a plurality of icons 510, 530, 540, and 560 and a pointer 570, as shown in FIG. 5, to perform a specific function of the electronic apparatus 100. Specifically, as shown in FIG. 5, the controller 140 displays a volume-up icon 510 and a volume-down icon 530 on a left area of the display screen to control a volume level, displays a channel-up icon 540 and a channel-down icon 560 on a right area of the display screen to control a channel, and displays a pointer 570 at a center of the display screen.

Volume level information 520 currently set in the electronic apparatus 100 is displayed between the volume-up icon 510 and the volume-down icon 530. Channel information 550 (for example, a channel name or a channel number) currently set in the electronic apparatus 100 is displayed between the channel-up icon 540 and the channel-down icon 560. Accordingly, the user can easily check the currently set channel information and the currently set volume level information.

Although the icons 510 and 530 for controlling the volume level are displayed on the left area and the icons 540 and 560 for controlling the channel are displayed on the right area of the display screen in the above-exemplary embodiment, this is merely an example, and the icons may be displayed on other areas of the display screen.

Also, although the icons 510 and 530 for controlling the volume level and the icons 540 and 560 for controlling the channel are displayed, icons for controlling other functions of the electronic apparatus 100 (for example, mute or power off) may be displayed on the display screen.

If a motion of moving one hand being spread is input through the motion input receiver 120 while the plurality of icons 510, 530, 540, and 560 and the pointer 570 are displayed, the controller 140 moves the pointer 570 in accordance with the moving motion.

If a grab motion of the user is input through the motion input receiver 120 while the pointer 570 is placed on one of the plurality of icons 510, 530, 540, and 560, the controller 140 executes a function corresponding to the icon on which the pointer 570 is placed.

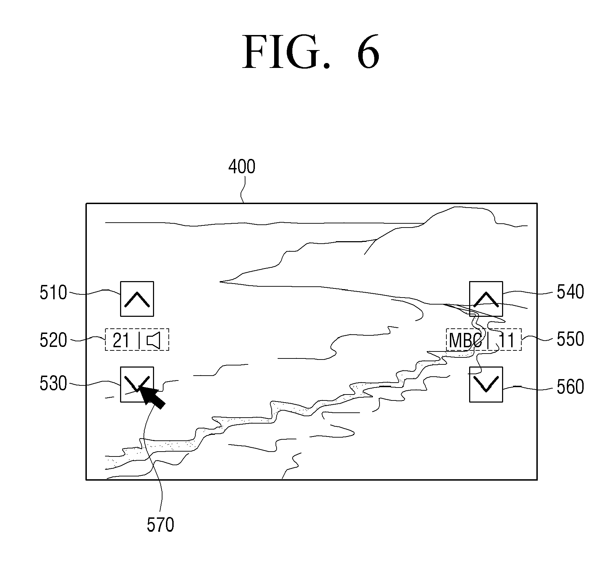

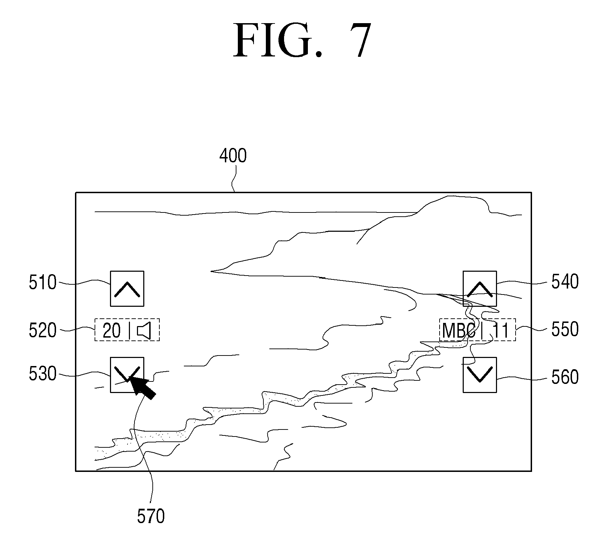

For example, if a motion of moving a user's hand being spread to the left of the display screen is input through the motion input receiver 120, the controller 140 moves the pointer 570 to the left of the display screen in accordance with the moving motion. If a grab motion of the user is input one time through the motion input receiver 120 while the pointer 570 is placed on the volume-down icon 530 as shown in FIG. 6, the controller 140 decreases the volume level currently set in the electronic apparatus 100 by "1". That is, if the volume level currently set in the electronic apparatus 100 is "21" and the grab motion of the user is input one time through the motion input receiver 120 while the pointer 570 is placed on the volume-down icon 530, the controller 140 sets the current volume level of the electronic apparatus 100 to "20". The controller 140 may control the volume level of the electronic apparatus 100 and may also change the volume level information 520 as shown in FIG. 7.

Even if the user's hand is moved when the grab motion is input through the motion input receiver 120, the controller 140 may fix the location of the pointer 570 without changing it.

If the grab motion of the user is continuously input through the motion input receiver 120 while the pointer 570 is placed on the volume-down icon 530, the controller 140 may decrease the current volume level of the electronic apparatus 100 continuously.

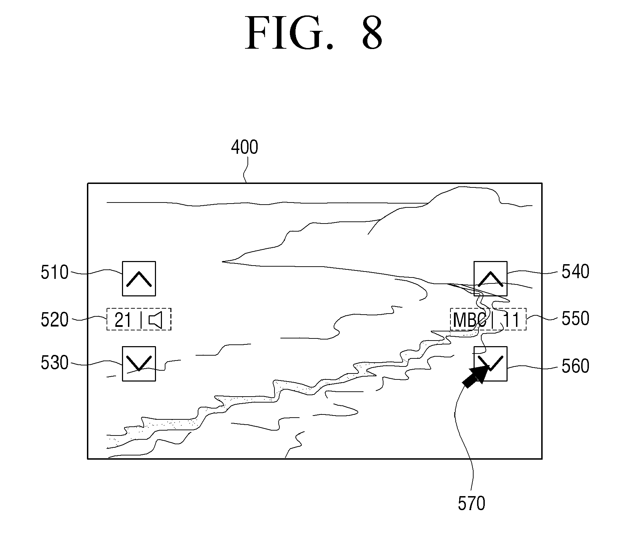

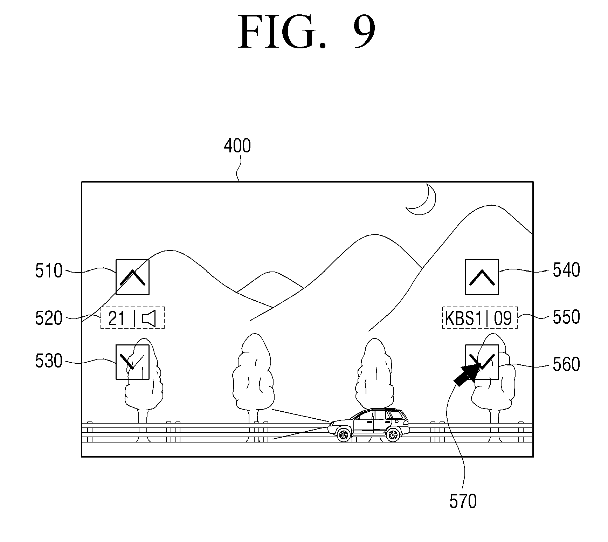

As another example, if a motion of moving user's hand being spread to the right is input through the motion input receiver 120, the controller 140 moves the pointer 570 to the right of the display screen in accordance with the moving motion. If a grab motion of the user is input two times through the motion input receiver 120 while the pointer 570 is placed on the channel-down icon 560 as shown in FIG. 8, the controller 140 receives a broadcast image of a channel number which is decreased by "2", and displays the broadcast image. That is, if a channel number currently set in the electronic apparatus 100 is "11" and the grab motion is input two times through the motion input receiver 120 while the pointer 570 is placed on the channel-down icon 560, the controller 140 receives a broadcast image of channel number "9" and displays the broadcast image of channel number "9". The controller 140 may control the channel of the electronic apparatus 100 and may also change the channel information 550 as shown in FIG. 9.

Also, if the grab motion of the user is continuously input through the motion input receiver 120 while the pointer 570 is placed on the channel-down icon 560, the controller 140 may decrease the current channel number of the electronic apparatus 100 continuously.

As described above, the electronic apparatus 100 allows the user to control the display apparatus using the user motion more easily and intuitively.

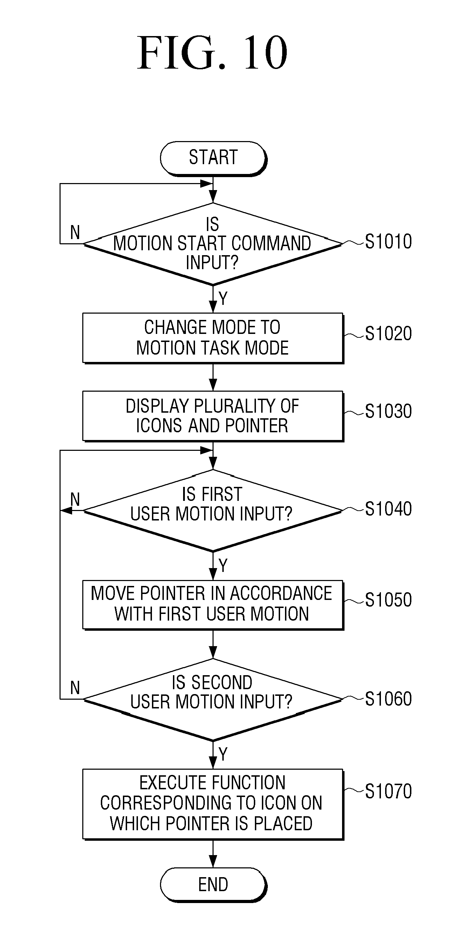

Hereinafter, a method for controlling the electronic apparatus 100 using a user motion will be explained with reference to FIG. 10.

The electronic apparatus 100 determines whether a motion start command is input through the motion input receiver 120 or not (S1010). The motion start command may be a motion of shaking a user's hand horizontally multiple times.

If the motion start command is input (S1010-Y), the electronic apparatus 100 changes a mode of the electronic apparatus 100 to a motion task mode (S1020). The motion task mode is a mode in which the electronic apparatus 100 is controlled in accordance with a user motion.

If the mode is changed to the motion task mode, the electronic apparatus 100 displays a plurality of icons and a pointer on the display screen (S1030). The plurality of icons may be displayed on a left area or a right area of the display screen, and the pointer may be displayed at a center of the display screen. The plurality of icons may include an icon for setting a channel and an icon for setting a volume level. However, it is noted that other icons may be displayed on the display screen for controlling different functions of the electronic apparatus 100 and that such icons may be displayed in response to the motion of shaking a user's hand horizontally multiple times, as described above, or according to other motions of the user's hand. For example, different icons may be displayed in response to different motions of the user's hand.

The electronic apparatus 100 determines whether a first user motion is input through the motion input receiver 120 or not (S1040). The user motion may be a motion of moving a user's hand being spread.

If it is determined that the first user motion is input (S1040-Y), the electronic apparatus 100 moves the pointer on the display screen in accordance with the first user motion (S1050).

The electronic apparatus 100 determines whether a second user motion is input through the motion input receiver 120 or not (S1060). The user motion may be a grab motion of clenching a user's hand.

If it is determined that the second user motion is input (S1060-Y), the electronic apparatus 100 executes a function corresponding to an icon on which the pointer is placed. For example, if the pointer is placed on a volume-up icon and the second user motion is input, the electronic apparatus 100 increases a volume level currently set in the electronic apparatus 100. Also, if the second motion is continuously input while the pointer is placed on a specific icon, the electronic apparatus 100 may execute a function of the icon on which the pointer is placed continuously.

Even if the user's hand is moved when the second user motion is input, the electronic apparatus 100 may fix the pointer without moving the pointer.

According to the method for controlling the electronic apparatus as described above, the user can control the electronic apparatus 100 using the user motion more easily and intuitively.

A program code to perform the controlling method according to the above-described exemplary embodiments may be stored in various types of recording media. Specifically, the program code may be stored in various types of recording media readable by a terminal apparatus, such as a random access memory (RAM), a flash memory, a read only memory (ROM), an erasable programmable ROM (EPROM), an electronically erasable and programmable ROM (EEPROM), a register, a hard disk, a removable disk, a memory card, a USB memory, and a CD-ROM.

The foregoing exemplary embodiments and advantages are merely exemplary and are not to be construed as limiting the present inventive concept. The exemplary embodiments can be readily applied to other types of apparatuses. Also, the description of the exemplary embodiments is intended to be illustrative, and not to limit the scope of the claims, and many alternatives, modifications, and variations will be apparent to those skilled in the art.

## Claims

1. A method for controlling of an electronic apparatus, the method comprising:
displaying at least one icon (510) and a pointer (570) to perform a motion task mode when a motion start command is input;
moving the pointer (570) in accordance with a first user motion; and
executing a function corresponding to the icon (510) when a second user motion is input while the pointer (570) is placed on the icon (510).

2. The method as claimed in claim 1, wherein the pointer (570) placed on the icon (510) is fixed without being moved while the second user motion is input.

3. The method as claimed in claim 1 or 2, wherein the executing comprises, continuously executing the function associated with the respective icon (510) on which the pointer (570) is placed when the pointer (570) is placed on the icon (510) and input of the second user motion is maintained.

4. The method as claimed in any of claims 1 to 3, wherein the first user motion corresponds to motion of spreading the user's hand, and
wherein the second user motion is a grab motion of clenching the user's hand.

5. The method as claimed in any of claims 1 to 4, wherein the icon (510) comprises at least one of a volume-up icon (510), a volume-down icon (530), a channel-up icon (540), and a channel-down icon (560).

6. The method as claimed in any of claims 1 to 5, wherein the icon (510, 530) comprises a volume-up icon (510) and a volume-down icon (530) which are displayed on a first area of a display screen, and a channel-up icon (540) and a channel-down icon (560) which are displayed the another area of the display screen different from the first area.

7. The method as claimed in claim 6, wherein a volume level information (520) currently set in the electronic apparatus is displayed on the first area on which the volume-up icon (510) and the volume-down icon (530) are displayed,
wherein a channel information (550) currently set in the electronic apparatus is displayed on the area on which the channel-up icon (540) and the channel-down icon (560) are displayed.

8. The method as claimed in any of claims 1 to 7, further comprising, if a motion end motion is input, removing the icons (510-560) and the pointer (570) from the display screen.

9. An electronic apparatus (100) comprising:
a motion input unit (120) which receives input of a user motion;
a display unit (193); and
a controller (140) which, if a motion start command is input through the motion input unit (120), displays an icon (510) and a pointer (570) to perform a motion task mode, controls the display unit (193) to move the pointer (570) in accordance with a first user motion which is input through the motion input unit (120), and, if a second user motion is input through the motion input unit (520) while the pointer is placed on the icon (510), executes a function of the electronic apparatus (100) corresponding to the icon (510).

10. The electronic apparatus as claimed in claim 9, wherein, while the second user motion is input, the controller (140) fixes the pointer (570) over the icon (510) without moving the pointer (570).

11. The electronic apparatus as claimed in claim 9 or 10, wherein, if the pointer (570) is placed on the icon (510) and input of the second user motion is maintained, the controller (140) continuously executes the function associated with the icon (510) on which the pointer (570) is placed.

12. The electronic apparatus as claimed in any of claims 9 to 11, wherein the first user motion is a spread motion of spreading user's hand, and
wherein the second user motion is a grab motion of clenching the user's hand.

13. The electronic apparatus as claimed in any of claims 9 to 12, wherein the icon (510) comprises at least one of a volume-up icon (510), a volume-down icon (530), a channel-up icon (540), and a channel-down icon (560).

14. The electronic apparatus as claimed in any of claims 9 to 13, wherein the icon comprises a volume-up icon (510) and a volume-down icon (530) which are displayed on one of a left area and a right area of the display screen (193), and a channel-up icon (540) and a channel-down icon (560) which are displayed the other one of the left area and the right area of the display screen (193).

15. The electronic apparatus as claimed in claim 14, wherein a volume level information (520) currently set in the electronic apparatus (100) is displayed on an area on which the volume-up icon (510) and the volume-down icon (530) are displayed,
wherein channel information (550) currently set in the electronic apparatus is displayed on an area on which the channel-up icon (540) and the channel-down icon (560) are displayed.
